# EUROPÄISCHE PATENTANMELDUNG

(11) **EP 4 468 459 A1**
(43) Veröffentlichungstag der Anmeldung: **27.11.2024**
(21) Anmeldenummer: 23175705.5
(22) Anmeldetag: 26.05.2023
(51) Int. Cl.: H01M 10/643, H01M 10/653, H01M 50/213, H01M 10/54

(54) **ENERGIESPEICHER MIT EINER MEHRZAHL VON ENERGIESPEICHERELEMENTEN IN FORM VON ZYLINDRISCHEN RUNDZELLEN UND VERFAHREN ZU DESSEN HERSTELLUNG**

(71) Anmelder: VARTA Microbattery GmbH, 73479 Ellwangen Jagst (DE)
(72) Erfinder: Magg, Manfred, 86316 Friedberg (DE)
(74) Vertreter: Ostertag & Partner Patentanwälte mbB

(57) **Zusammenfassung**

Ein Energiespeicher (100; 200) umfasst eine Mehrzahl von Energiespeicherelementen in Form von zylindrischen Rundzellen (10), die jeweils eine zylindrische Mantelfläche und zwei Stirnseiten aufweisen. Die zylindrischen Rundzellen (10) sind mit paralleler Ausrichtung ihrer jeweiligen Längsachsen in einem Verbund angeordnet. Dabei sind die zylindrischen Rundzellen (10) an einem Strukturbauteil (11) angeordnet, wobei eine erste Stirnseite der zylindrischen Rundzellen (10) dem Strukturbauteil (11) zugewandt ist. Die zweite Stirnseite der zylindrischen Rundzellen (10) wird von einem Zellhalter (12) gehalten. Zwischen dem Strukturbauteil (11) und der ersten Stirnseite der zylindrischen Rundzellen (10) ist ein gitterartiges Bauteil (13; 23) angeordnet ist, wobei im Bereich des gitterartigen Bauteils (13; 23) ein Vergussmaterial (14) vorgesehen ist und das gitterartige Bauteil (13) in das Vergussmaterial (14) eingebettet ist.

## Beschreibung

Die vorliegende Erfindung betrifft einen Energiespeicher mit einer Mehrzahl von Energiespeicherelementen in Form von zylindrischen Rundzellen sowie ein Verfahren zu dessen Herstellung. Weiterhin betrifft die Erfindung ein Verfahren zum Recyceln eines Energiespeichers.

### ANWENDUNGSGEBIET UND STAND DER TECHNIK

Bei einem elektrischen Energiespeicher werden in der Regel mehrere elektrochemische Energiespeicherelemente zusammengeschaltet, um so die für verschiedene Anwendungen erforderlichen elektrischen Ströme und Spannungen bereitstellen zu können.

Unter einem Energiespeicherelement werden vorliegend sowohl eine einzelne, zur Speicherung von elektrischer Energie befähigte elektrochemische Zelle als auch eine Batterie mit mehreren elektrisch miteinander verschalteten, zur Speicherung von elektrischer Energie befähigten elektrochemischen Zellen verstanden.

Jedes elektrochemische Energiespeicherelement basiert auf einer oder mehreren elektrochemischen Zelle. Eine elektrochemische Zelle im Sinne der vorliegenden Anmeldung umfasst mindestens eine positive und mindestens eine negative Elektrode, welche durch einen Separator voneinander getrennt sind. In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine bei vergleichsweise hohem Redoxpotential stattfindende Teilreaktion läuft an der positiven Elektrode ab. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem, der Elektrodenreaktion entsprechenden lonenstrom innerhalb der elektrochemischen Zelle. Dieser lonenstrom, der von einem ionenleitenden Elektrolyten ermöglicht wird, durchquert den Separator.

In sekundären (wieder aufladbaren) elektrochemischen Zellen ist diese Entladereaktion reversibel, es besteht also die Möglichkeit, die bei der Entladung erfolgte Umwandlung von chemischer Energie in elektrische Energie umzukehren.

Für Anwendungen im täglichen Umfeld oder im Haushalt, beispielsweise für Telefone, Haushaltsgeräte, Werkzeuge, elektrische Fahrräder, elektrische Roller oder ähnliches, werden in der Regel sogenannte Akkumulatoren verwendet, also wiederaufladbare Energiespeicherelemente. Hierbei kommen entweder einzelnen Energiespeicherzellen oder Batteriepacks/Batteriemodule, die mehrere Energiespeicherzellen umfassen, zum Einsatz.

Größere Energiespeicher oder Energiespeichersysteme sind meist aus Batteriemodulen zusammengesetzt, die in der Regel eine Vielzahl von miteinander verschaltete Energiespeicherzellen umfassen. Die Anzahl der in einem Batteriemodul enthaltenen Energiespeicherzellen hängt von den jeweils benötigten Strömen und Spannungen ab. Für Anwendungen im Bereich der Elektromobilität oder für große stationäre Energiespeicher werden in der Regel sehr große Ströme und hohe Spannungen und entsprechend viele Energiespeicherzellen benötigt.

Eine in Energiespeicherelementen oftmals verwendete elektrochemische Zelle ist die Lithium-lonen-Zelle. Diese umfasst Elektroden, die Lithium-Ionen reversibel aufnehmen und wieder abgeben können, sowie einen Lithium-Ionen enthaltenden Elektrolyten.

Natrium-Ionen-Zellen stellen eine interessante Alternative zu Lithium-lonen-Zellen dar. In Natrium-Ionen-Zellen erfolgt der Ladungstransport im Elektrolyten über Natriumionen.

Bei elektrochemischen Zellen und insbesondere auch bei Lithium-lonen-Zellen sind verschiedene Bauformen bekannt. Neben prismatischen Formen sind Knopfzellen und zylindrische Rundzellen weit verbreitet. Sowohl Knopfzellen als auch Rundzellen haben eine im Wesentlichen kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist.

Energiespeicher sind oftmals mit einem kubischen äußeren Gehäuse ausgestattet. Innerhalb des Gehäuses befinden sich die Energiespeicherelemente, wobei zur Positionierung und Fixierung der Energiespeicherelemente innerhalb des Gehäuses oftmals eine Haltematrix verwendet wird, die auch als Zellhalter bezeichnet wird. Im Fall von zylindrischen Rundzellen wird in der Regel ein zweiteiliger Zellhalter aus Kunststoff eingesetzt, der die entlang ihrer Längsachsen parallel ausgerichteten Rundzellen im Bereich ihrer jeweiligen Stirnseiten fixiert und einrahmt.

Ein zweiteiliger Zellhalter geht beispielsweise aus der EP 3 926 704 A1 hervor. Hier wird ein Batteriemodul beschrieben, das zwei oder mehr Batterieblöcke umfasst. Jeder Batterieblock umfasst eine Mehrzahl von zylindrischen Rundzellen, die in entsprechenden Aufnahmen eines Zellhalters angeordnet sind. Die Rundzellen sind dabei in einem regelmäßigen Muster in mehreren Reihen angeordnet. Der Zellhalter untergliedert sich in ein unteres Zellhalterelement und in ein oberes Zellhalterelement, wobei die Stirnseiten der zylindrischen Rundzellen jeweils von dem oberen Zellhalterelement bzw. dem unteren Zellhalterelement eingefasst und fixiert werden.

Der Betrieb eines Energiespeichers und insbesondere die Entlade- und Ladeprozesse bei den Energiespeicherelementen sind in der Regel mit einer Wärmeentwicklung verbunden, die problematisch werden kann. Insbesondere im Bereich der Elektromobilität bei Kraftfahrzeugen wird zur Vermeidung einer Überhitzung des Energiespeichers oftmals ein Kühlboden im Bereich des Energiespeichers eingesetzt. Zur Optimierung der Wärmeabführung kann eine Wärmeleitmasse zwischen dem Energiespeichermodul und dem Kühlboden vorgesehen sein.

Aus der DE 10 2021 118 644 A1 geht eine Batterie mit einem Batteriemodul hervor. Der Boden des Batteriemodulgehäuses ist mit mindestens einem Loch versehen und beispielsweise als Gitter ausgebildet, sodass eine applizierte Wärmeleitmasse in das Innere des Batteriemoduls eindringen kann. Der Boden des Batteriegehäuses kann als Kühlboden ausgebildet sein.

Wichtig für einen Betrieb des Energiespeichers ist eine elektrische Isolierung der Energiespeicherelemente gegenüber dem Gehäuse des Energiespeichers, insbesondere wenn es sich um ein metallisches, also elektrisch leitfähiges Gehäuse handelt. Durch eine elektrische Isolierung wird das elektrische Potential der Energiespeicherelemente von der tragenden Struktur, also beispielsweise dem Batteriegehäuse, getrennt.

Für eine elektrische Isolierung der einzelnen Energiespeicherelemente ist es beispielsweise bekannt, die einzelnen Energiespeicherelemente mit einem Schrumpfschlauch aus einem Kunststoffmaterial zu umgeben. Die Anbringung eines Schrumpfschlauchs ist jedoch mit einem erhöhten Herstellungsaufwand verbunden und erhöht zudem den thermischen Widerstand, so dass eine Wärmeabfuhr aus den Energiespeicherelementen erschwert wird.

Auch ein Zellhalter aus Kunststoff kann als Isolationsmittel dienen, wobei der Zellhalter in diesem Fall einen ausreichenden Abstand zwischen den Energiespeicherelementen und anderen Strukturen, beispielsweise dem Gehäuse, herstellen muss. Für einen solchen Zellhalter, der sich in den Bereichen der Stirnseiten der Rundzellen innerhalb des Gehäuses befindet, werden üblicherweise Spritzgussteile verwendet. Diese Bauteile verursachen jedoch bauartbedingt verhältnismäßig hohe Einmalkosten durch teure Werkzeuge. Weiterhin muss technologiebedingt eine Mindestwandstärke der Zellhalter eingehalten werden. Dies erfordert einen gewissen Bauraum innerhalb des Energiespeichers, was zum einen das Volumen des Energiespeichers erhöht und sich gleichzeitig auch nachteilig auf die Wärmeableitung auswirkt.

Eine weitere praktizierte Möglichkeit zur elektrischen Isolierung der Energiespeicherelemente gegenüber anderen Strukturbauteilen ist die Verwendung einer Isolationsfolie. Nachteilig hierbei ist, dass zu diesem Zweck geeignete Folien im Allgemeinen einen hohen Wärmewiderstand aufweisen, so dass die Wärmeableitung dadurch beeinträchtigt wird. Zudem ist die mechanische Stabilität und Haftung der Isolationsfolie im Wesentlichen von den klebenden Eigenschaften der Folie abhängig. Dies kann insbesondere bei rauen Oberflächen des Strukturbauteils, wie beispielsweise bei Gussoberflächen, gegebenenfalls problematisch sein.

Eine weitere bekannte Möglichkeit zur elektrischen Isolierung ist eine entsprechende Lackierung des Strukturbauteils. Abhängig von dem jeweiligen Material erfordert dies in der Regel eine Prüfung der elektrischen Durchschlagfestigkeit, um die Sicherheit im Hinblick auf die elektrische Isolierung zu gewährleisten. Insgesamt sind mit dieser Vorgehensweise hohe Prozesskosten verbunden, da neben der eigentlichen Lackierung vorab eine Reinigung der Oberflächen und die erwähnte anschließende elektrische Durchschlagprüfung durchgeführt werden müssen.

### AUFGABE UND LÖSUNG

Vor diesem Hintergrund stellt sich die Erfindung die Aufgabe, einen verbesserten Energiespeicher bereitzustellen, der auf der einen Seite eine elektrische Isolierung der Energiespeicherelemente gegenüber Strukturbauteilen sicherstellt und der auf der anderen Seite eine gute Wärmeabführung aus dem Energiespeicher erlaubt. Der Energiespeicher soll dabei ferner eine kostengünstige Möglichkeit bieten, den für die Energiespeicherung nutzbaren Bauraum zu optimieren und den Energiespeicher kostengünstig herzustellen. Darüber hinaus soll der Energiespeicher vorzugsweise eine besonders vorteilhafte Möglichkeit bieten, am Ende der Produktlebenszeit eine Wiederaufbereitung der Komponenten des Energiespeichers zu erleichtern.

Diese Aufgabe wird durch einen Energiespeicher gelöst, wie er sich aus Anspruch 1 ergibt. Weiterhin wird die Aufgabe durch ein Verfahren zur Herstellung eines Energiespeichers und durch ein Verfahren zum Recyceln eines Energiespeichers gemäß den weiteren unabhängigen Ansprüchen gelöst. Bevorzugte Ausgestaltungen des Energiespeichers bzw. des erstgenannten Verfahrens ergeben sich aus den jeweiligen rückbezogenen Ansprüchen.

Der erfindungsgemäße Energiespeicher umfasst eine Mehrzahl von Energiespeicherelementen in Form von zylindrischen Rundzellen. Diese zylindrischen Rundzellen umfassen jeweils eine zylindrische Mantelfläche und zwei Stirnseiten, insbesondere runde Stirnseiten. Der Energiespeicher zeichnet sich zunächst durch die folgenden Merkmale aus:
a. Die zylindrischen Rundzellen sind mit paralleler Ausrichtung ihrer jeweiligen Längsachsen in einem Verbund angeordnet;
b. Die zylindrischen Rundzellen sind an einem Strukturbauteil angeordnet, wobei eine erste Stirnseite der zylindrischen Rundzellen dem Strukturbauteil zugewandt ist;
c. Die zweite Stirnseite der zylindrischen Rundzellen wird von einem Zellhalter gehalten.

Erfindungsgemäß ist der Energiespeicher weiterhin dadurch gekennzeichnet, dass
d. zwischen dem Strukturbauteil und der ersten Stirnseite der zylindrischen Rundzellen ein gitterartiges Bauteil angeordnet ist, wobei
e. im Bereich des gitterartigen Bauteils ein Vergussmaterial vorgesehen ist und
f. das gitterartige Bauteil in das Vergussmaterial eingebettet ist.

Im Rahmen der vorliegenden Anmeldung wird unter dem Begriff Energiespeicher allgemein ein Verbund von mehreren, miteinander verschalteten wiederaufladbaren Energiespeicherelementen verstanden. Weiterhin ist der Energiespeicher in der Regel mit einem positiven Pol und einem negativen Pol ausgestattet, sodass die von dem Energiespeicher bereitgestellte elektrische Spannung von außen abgreifbar ist. Bei dem Energiespeicher kann es sich beispielsweise um Akkumulatoren für Telefone, Haushaltsgeräte, Werkzeuge, elektrische Fahrräder oder Roller, oder um Energiespeicher/Energiespeichermodule im Bereich der Elektromobilität bei Kraftfahrzeugen oder um Energiespeicher/Energiespeichermodule zur Energieversorgung von Gebäuden oder ähnliches handeln.

Bei dem erfindungsgemäßen Energiespeicher handelt es sich um eine Bauteilkombination, bei der die Energiespeicherelemente, also die zylindrischen Rundzellen, auf einem Strukturbauteil angeordnet sind. Dabei ist ein gitterartiges Bauteil zwischen den Energiespeicherelementen und dem Strukturbauteil vorgesehen. Dieses gitterartige Bauteil sorgt zusammen mit dem Vergussmaterial, in welches das gitterartige Bauteil eingebettet ist, für eine elektrische Isolierung innerhalb des Energiespeichers. Insbesondere wird hierdurch ein gleichmäßiger Isolationsabstand zwischen den Energiespeicherelementen und dem Strukturbauteil sichergestellt. Weiterhin wird hierdurch ein guter Wärmeübergang zwischen den Energiespeicherelementen und dem Strukturbauteil erreicht. Vorzugsweise umschließt das Vergussmaterial diejenigen Stirnseiten der zylindrischen Rundzellen, die dem Strukturbauteil zugewandt sind, so dass eine sehr gute Wärmeabfuhr aus den Energiespeicherelementen möglich ist.

Die zylindrischen Rundzellen können insbesondere in einer Ebene in relativ enger Packung angeordnet sein, wobei die einzelnen Rundzellen mit paralleler Ausrichtung ihrer Längsachsen nebeneinander angeordnet sind. Die zylindrischen Rundzellen können beispielsweise in mehreren parallelen Reihen angeordnet sein. In diesem Verbund der zylindrischen Rundzellen ist jeweils eine Stirnseite der Rundzellen in Richtung des Strukturbauteils ausgerichtet (Unterseite des Verbunds). Die andere Stirnseite wird von einem Zellhalter gehalten (Oberseite des Verbunds). Auf der Unterseite des Verbunds, also der Seite, auf der die jeweiligen Stirnseiten der zylindrischen Rundzellen dem gitterartigen Bauteil und dem Strukturbauteil zugewandt sind, befindet sich vorzugsweise kein Zellhalter. Insgesamt ist also nur ein Zellhalter bzw. ein einteiliger Zellhalter vorgesehen. Im Vergleich mit herkömmlichen Lösungen, die mit zweiteiligen Zellhaltern oder zwei Zellhaltern oder mehr arbeiten, sind also weniger Bauteile bei der erfindungsgemäßen Lösung vorgesehen, was im Hinblick auf die Kosten und die Montage Vorteile bietet.

In besonders vorteilhaften Ausführungsformen zeichnet sich der erfindungsgemäße Energiespeicher durch das folgende zusätzliche Merkmal aus:
a. Das Vergussmaterial liegt in Form einer Schicht vor, in welche weiterhin zumindest die ersten Stirnseiten der zylindrischen Rundzellen eingebettet sind.

Durch die Einbettung der ersten Stirnseiten der zylindrischen Rundzellen in das Vergussmaterial wird neben der guten Wärmeübertragung gleichzeitig eine Fixierung der zylindrischen Rundzellen an dem Strukturbauteil erreicht.

Die Schicht aus Vergussmaterial kann beispielsweise eine Schichtdicke in einem Bereich von einigen Millimetern aufweisen, beispielsweise zwischen 1 mm und 10 mm, vorzugsweise zwischen 3 mm und 5 mm. Neben der Einbettung der jeweiligen Stirnseiten der zylindrischen Rundzellen kann hierdurch auch ein Abschnitt der zylindrischen Mantelflächen der zylindrischen Rundzellen mit eingebettet sein.

In besonders bevorzugter Weise ist das folgende zusätzliche Merkmal vorgesehen:
a. Bei dem Vergussmaterial handelt es sich um ein ausgehärtetes Vergussharz.

Durch ein ausgehärtetes Vergussharz im Zusammenspiel mit dem gitterartigen Bauteil kann eine besonders stabile Fixierung der zylindrischen Rundzellen erfolgen.

Vor der Aushärtung handelt es sich bei dem Vergussmaterial zunächst vorzugsweise um eine fließfähige Masse, die im Zuge der Fertigung des Energiespeichers im Bereich des gitterartigen Bauteils appliziert wird. Nach der erfolgten Aushärtung ist das Vergussmaterial zweckmäßigerweise nicht mehr fließfähig.

Als Vergussmaterial eignen sich insbesondere Epoxid-, Polyurethan- oder Silikon-basierte Vergussmaterialien. Es können Einkomponenten- oder Mehrkomponentensysteme eingesetzt werden. Eine Aushärtung der Materialien kann in an sich bekannter Weise erfolgen, beispielsweise durch Quervernetzung, UV-Bestrahlung oder thermische Behandlung.

Besonders geeignet sind auf Polyurethan basierende, zweikomponentige Materialien, welche nach dem Aushärten eine dauerelastische Konsistenz aufweisen.

In besonders bevorzugten Ausführungsformen des erfindungsgemäßen Energiespeichers ist im Hinblick auf das Vergussmaterial mindestens eines der folgenden zusätzlichen Merkmale vorgesehen:
a. Das Vergussmaterial ist elektrisch isolierend;
b. Das Vergussmaterial ist wärmeleitfähig.

Vorzugsweise sind die vorgenannten Merkmale a. und b. in Kombination miteinander verwirklicht.

Es ist weiterhin bevorzugt, dass das Vergussmaterial vibrationshemmende und/oder flammhemmende Eigenschaften aufweist.

Elektrisch isolierende Eigenschaften des Vergussmaterials sind insbesondere in solchen Fällen besonders vorteilhaft, in das Strukturbauteil, auf dem die Energiespeicherelemente angeordnet sind, selbst elektrisch leitfähig ist. Dies ist in der Regel der Fall, da beispielsweise entsprechende Gehäuseteile eines Energiespeichers oder andere Strukturbauteile oftmals aus metallischen Werkstoffen gebildet sind, beispielsweise aus Aluminium.

Die Wärmeleitfähigkeit des Vergussmaterials ist besonders vorteilhaft, da hierdurch eine Wärmeabfuhr der beim Betrieb der Energiespeicherelemente entstehenden Wärme gewährleistet werden kann. Auf diese Weise kann daher in besonders vorteilhafter Weise eine Überhitzung des Energiespeichers vermieden werden.

Durch den Wegfall einer durchgehenden Isolationsschicht, die bei herkömmlichen Energiespeichern in der Regel vorgesehen ist und die einen hohen thermischen Widerstand mit sich bringt, kann bei dem erfindungsgemäßen Energiespeicher auf ein Vergussmaterial mit etwas weniger hohen Anforderungen bezüglich der thermischen Leitfähigkeit zurückgegriffen werden. Dies trägt maßgeblich zu einer kostengünstigen Systembauweise bei.

Bevorzugt weist das Vergussmaterial in ausgehärtetem Zustand eine Wärmeleitfähigkeit im Bereich von 0,7 bis 2 W/m*K auf.

Auch im Hinblick auf die Wärmeleitfähigkeit und die Wärmeabfuhr ist es besonders vorteilhaft, wenn das Vergussmaterial die unteren Stirnseiten der zylindrischen Rundzellen und gegebenenfalls auch einen Teil der zylindrischen Mantelfläche der zylindrischen Rundzellen in diesem Bereich umschließt. Hierdurch wird eine direkte und flächige Wärmeübertragung ermöglicht. Diese thermische Energie kann über die Schicht des Vergussmaterials direkt auf das Strukturbauteil übertragen werden und so aus dem Energiespeicher in besonders effektiver Weise abgeleitet werden.

In weiteren bevorzugten Ausführungsformen des erfindungsgemäßen Energiespeichers ist mindestens eines der folgenden zusätzlichen Merkmale vorgesehen:
a. Das gitterartige Bauteil ist aus einem elektrisch isolierenden Material gebildet;
b. Das gitterartige Bauteil ist aus Kunststoff und/oder Glasfaser und/oder Aramid und/oder Nylon und/oder Epoxidharz und/oder Kombinationen dieser Materialien gebildet;
c. Das gitterartige Bauteil ist aus einem faserverstärkten Material gebildet.

In besonders bevorzugter Weise sind die vorgenannten Merkmale a. und b., oder a. und c., oder ganz besonders bevorzugt, die Merkmale a. bis c., in Kombination miteinander verwirklicht.

Das elektrisch isolierende Material des gitterartigen Bauteils unterstützt die Trennung des elektrischen Potentials der zylindrischen Rundzellen von dem des Strukturbauteils. Insbesondere in Kombination mit einem elektrisch isolierenden Vergussmaterial erfolgt damit eine besonders vorteilhafte elektrische Isolierung der zylindrischen Rundzellen gegenüber dem Strukturbauteil.

Durch eine Faserverstärkung des Materials für das gitterartige Bauteil gemäß dem vorgenannten Merkmal c. kann die Zugfestigkeit des gitterartigen Bauteils erhöht werden. Dies bietet besondere Vorteile im Hinblick auf die Stabilität des gitterartigen Bauteils. Durch eine hohe Zugfestigkeit des gitterartigen Bauteils kann insbesondere sichergestellt werden, dass das gitterartige Bauteil beim Zerlegen des Energiespeichers nicht reißt, wie nachfolgend noch näher im Zusammenhang mit einem Recyceln des Energiespeichers erläutert werden wird.

Allgemein handelt es sich bei dem gitterartigen Bauteil vorzugsweise um ein flächiges Substrat mit einer Vielzahl von Durchbrechungen. Insbesondere können diese Durchbrechungen regelmäßig angeordnet sein. Es kann sich bei dem gitterartigen Bauteil beispielsweise um ein regelmäßiges Netz oder Gitter handeln. Die Kreuzungsbereiche von einzelnen Strängen des Netzes oder Gitters können auf verschiedene Weise ausgebildet sein. Beispielsweise können die Kreuzungen als Atlas- oder Leinwandbindung (alternierend) oder als Köperbindung (gleichförmig) ausgeführt sein. Weiterhin können die Stränge beispielsweise auch in einer Ebene liegen. Insgesamt kann die Ausbildung und die Stärke des gitterartigen Bauteils an die jeweiligen elektrischen und mechanischen Anforderungen des Energiespeichers angepasst werden.

Prinzipiell kann auch eine gelochte oder perforierte Folie, insbesondere eine gelochte oder perforierte elektrisch isolierende Kunststofffolie, als gitterartiges Bauteil zum Einsatz kommen. Die gelochte oder perforierte Folie ist dabei so ausgebildet, dass sie durchlässig für das Vergussmaterial ist.

Im Allgemeinen hat jedoch ein Gitter oder Netz mit einer höheren Zugfestigkeit als eine Folie besondere Vorteile, da es die Anforderungen an eine mechanische Festigkeit besser erfüllt. Zudem kann ein Gitter oder Netz gegenüber einer gelochten oder perforierten Folie gegebenenfalls bessere Wärmeleitfähigkeiten aufweisen.

Das gitterartige Bauteil kann im Prinzip eben oder an den Seiten gebogen sein. Die Ausgestaltung mit gebogenen Seiten oder mit einer gebogenen Seite ist besonders vorteilhaft, da diese gebogene Seite ein seitliches Angriffsmittel im Sinne der nachfolgenden Beschreibung bilden kann. Auch eine dreidimensionale Formgebung des gitterartigen Bauteils ist möglich.

Bevorzugt besteht das gitterartige Bauteil aus einem flächigen Material aus Glasfasersträngen, die eine Dicke im Bereich von 0,2 bis 1,0 mm, bevorzugt von 0,3 bis 0,5 mm, aufweisen, und mit ca. 10 Durchbrechungen je 1 cm³.

In weiteren besonders bevorzugten Ausführungsformen des erfindungsgemäßen Energiespeichers ist mindestens eines der folgenden zusätzlichen Merkmale vorgesehen:
a. Zwischen dem gitterartigen Bauteil und den ersten Stirnseiten der zylindrischen Rundzellen besteht eine Vorfixierungs-Klebeverbindung;
b. Zwischen dem gitterartigen Bauteil und dem Strukturbauteil besteht eine Vorfixierungs-Klebeverbindung.

Die Vorfixierungs-Klebeverbindungen gemäß den vorgenannten Merkmalen a. oder b. oder, besonders bevorzugt, a. und b. bieten besondere Vorteile bei der Fertigung des erfindungsgemäßen Energiespeichers. Beispielsweise ist hierdurch eine Reduzierung der Anzahl der Arbeitsschritte möglich.

Der Begriff *"*Vorfixierung*"* meint in diesem Zusammenhang, dass die eigentliche Fixierung des gitterartigen Bauteils im fertig montierten Energiespeicher im Wesentlichen von dem Vergussmaterial übernommen wird.

Bei der Vorfixierungs-Klebeverbindung zwischen dem gitterartigen Bauteil und den ersten Stirnseiten der zylindrischen Rundzellen kann der Verbund der zylindrischen Rundzellen mit dem gitterartigen Bauteil bereits vor der weiteren Assemblierung des Energiespeichers zusammengefügt werden. Auf diese Weise wird das weitere Einsetzen der Energiespeicherelemente an der vorgesehenen Position auf dem Strukturbauteil erleichtert. Je nach Abfolge der Verfahrensschritte bei der Assemblierung des Energiespeichers kann in entsprechender Weise auch die Vorfixierungs-Klebeverbindung zwischen dem gitterartigen Bauteil und dem Strukturbauteil besondere Vorteile und Erleichterungen bieten.

In bevorzugten Ausführungsformen des erfindungsgemäßen Energiespeichers kann weiterhin eines der folgenden zusätzlichen Merkmale vorgesehen sein:
a. Das gitterartige Bauteil ist einseitig selbstklebend;
b. Das gitterartige Bauteil ist beidseitig selbstklebend.

Die selbstklebenden Eigenschaften des gitterartigen Bauteils gemäß dem vorgenannten Merkmal a. oder b. ermöglichen es, dass das gitterartige Bauteil direkt auf die entsprechende Stirnseite der zylindrischen Rundzellen und/oder direkt auf das Strukturbauteil geklebt werden kann. Alternativ ist es auch möglich, dass zuvor ein entsprechender Klebstoff auf die entsprechenden Bauteile aufgebracht wird.

Im Hinblick auf das Strukturbauteil zeichnet sich der erfindungsgemäße Energiespeicher insbesondere durch mindestens eines der folgenden zusätzlichen Merkmale aus:
a. Das Strukturbauteil ist ein Gehäuseteil des Energiespeichers;
b. Das Strukturbauteil ist eine Kühlplatte;
c. Das Strukturbauteil ist ein Teil einer Fahrzeugkarosserie.

Es können auch Kombinationen dieser Merkmale vorgesehen sein. Beispielsweise kann es sich bei dem Strukturbauteil um eine in ein Gehäuseteil des Energiespeichers integrierte Kühlplatte oder um eine in ein Teil einer Fahrzeugkarosserie integrierte Kühlplatte handeln.

Das Strukturbauteil kann insbesondere aus einem metallischen Werkstoff, beispielsweise aus Aluminiumguss, gebildet sein. In anderen Ausführungsformen ist es auch möglich, dass das Strukturbauteil nichtmetallisch ist und beispielsweise aus einem faserverstärkten Kunststoff oder Ähnlichem gebildet ist.

Je nach Anwendung ist eine gute mechanische Festigkeit des Strukturbauteils vorteilhaft, sodass eine Stabilität und beispielsweise eine Sturzfestigkeit des Energiespeichers gewährleistet werden. Die Stabilität kann beispielsweise durch die Verwendung von Kohlenstofffaser für das Strukturbauteil erhöht werden.

Weiterhin ist es besonders vorteilhaft, wenn das Strukturbauteil eine gute thermische Leitfähigkeit aufweist, um eine gute Wärmeabfuhr aus dem Energiespeicher heraus zu ermöglichen.

Im Hinblick auf den Zellhalter zeichnet sich der erfindungsgemäße Energiespeicher vorzugsweise durch mindestens eines der folgenden zusätzlichen Merkmale aus:
a. Der Zellhalter ist einteilig;
b. Der Zellhalter ist aus Kunststoff.

Vorzugsweise sind die vorgenannten Merkmale a. und b. in Kombination miteinander verwirklicht.

Bei dem Zellhalter, der auch als Haltematrix bezeichnet werden kann, handelt es sich insbesondere um ein Spritzgussteil aus Kunststoff. Ein besonderer Vorteil von Kunststoff als Material für den Zellhalter liegt in dessen verhältnismäßig leichtem Gewicht und dessen elektrisch isolierenden Eigenschaften.

Bei dem erfindungsgemäßen Energiespeicher ist der Zellhalter so angeordnet, dass er diejenigen Stirnseiten der zylindrischen Rundzellen fixiert, die nicht dem Strukturbauteil zugewandt sind. Der Zellhalter fixiert damit die zylindrischen Rundzellen auf der Oberseite des Verbunds der zylindrischen Rundzellen.

Der Zellhalter kann so ausgebildet sein, dass er einen Rahmen mit einzelnen Aufnahmepositionen für die Stirnseiten der zylindrischen Rundzellen auf der Oberseite des Verbunds bildet.

Mithilfe des Zellhalters können die zylindrischen Rundzellen vorzugsweise in einem regelmäßigen Muster und gegebenenfalls mit einem gewissen Abstand zueinander gehalten werden.

Im Hinblick auf die zylindrischen Rundzellen selbst zeichnet sich der erfindungsgemäße Energiespeicher in bevorzugten Ausführungsformen durch mindestens eines der folgenden zusätzlichen Merkmale aus:
a. Die zylindrischen Rundzellen sind Lithium-Ionen-Zellen;
b. Die zylindrischen Rundzellen sind Natrium-lonen-Zellen.

Die vorgenannten Merkmale a. und b. sind insbesondere als Alternativen zu verstehen, so dass in dem erfindungsgemäßen Energiespeicher entweder Lithium-Ionen-Zellen oder Natrium-Ionen-Zellen vorgesehen sind. Lithium-Ionen-Zellen sind besonders bevorzugt. Weiterhin ist es auch möglich, dass eine Kombination dieser verschiedenen Energiespeicherelemente in dem Energiespeicher vorgesehen ist.

Weiterhin ist es möglich, dass in dem erfindungsgemäßen Energiespeicher Energiespeicherelemente auf der Basis von anderen elektrochemischen Systemen verbaut sind.

Lithium-lonen-Zellen sind für vielfältige Anwendungen von Batterien weit verbreitet, da Lithium-Ionen-Zellen sich vor allem durch eine besonders große Energiedichte bei vergleichsweise niedrigem Gewicht auszeichnen.

Allgemein basieren Lithium-Ionen-Zellen oder allgemein Lithium-Ionen-Energiespeicherelemente auf dem Einsatz von Lithium, welches in Form von Ionen zwischen den Elektroden des Energiespeicherelements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Energiespeicherelemente kommen prinzipiell sämtliche Materialien in Frage, die Lithium-Ionen aufnehmen und wieder abgeben können. Für die negative Elektrode werden beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO2), Lithiummanganoxid (LiMn2O4), Lithiumeisenphosphat (LiFePO4) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren sind insbesondere metallische Folien geeignet, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und sorgt häufig auch für die Haftung des Aktivmaterials auf den Stromkollektoren.

Als Elektrolyten für Lithium-Ionen-Energiespeicherelemente eignen sich vor allem Lösungen von Lithiumsalzen wie Lithiumhexafluorophosphat (LiPF6) in organischen Lösungsmitteln (z. B. Ether und Ester der Kohlensäure).

In zylindrischen Rundzellen sind die Elektroden der Zelle in bevorzugter Weise in Form eines Wickels angeordnet, wobei zwischen den bandförmigen Elektroden mindestens ein bandförmiger Separator angeordnet ist. In anderen Ausführungsformen können die Elektroden auch in gestapelter Form vorliegen.

Im Vergleich mit Lithium-Ionen-Zellen weisen Natrium-lonen-Zellen im Allgemeinen eine geringere Energiedichte auf. Sie können dennoch bevorzugt sein, da Natrium-Ionen-Zellen auf den nur begrenzt verfügbaren Rohstoff Lithium verzichten und daher im Allgemeinen deutlich preisgünstiger und rohstoffschonender als Lithium-lonen-Zellen sind. Insgesamt ergibt sich bei Natrium-Ionen-Zellen ein erheblicher Kostenvorteil bei den Rohmaterialien für die Herstellung der Energiespeicherelemente. Zudem ist die Verwendung von Natrium wesentlich umweltfreundlicher als Lithium. Darüber hinaus ist Natrium stabiler als Lithium, so dass Natrium-Ionen-Zellen weniger anfällig für Überhitzung und andere Sicherheitsprobleme sind und zudem im Allgemeinen eine längere Lebensdauer als Lithium-Ionen-Zellen aufweisen.

In ganz besonders bevorzugten Ausführungsformen des erfindungsgemäßen Energiespeichers ist mindestens eines der folgenden zusätzlichen Merkmale vorgesehen:
a. Das gitterartige Bauteil weist mindestens ein seitliches Angriffsmittel zum Herausziehen des gitterartigen Bauteils auf;
b. Das seitliche Angriffsmittel wird von einem abgewinkelten Abschnitt des gitterartigen Bauteils gebildet;
c. Das seitliche Angriffsmittel ist eine Lasche.

Vorzugsweise sind die vorgenannten Merkmale a. und b. und, besonders bevorzugt, die vorgenannten Merkmale a., b. und c. in Kombination miteinander verwirklicht.

Das seitliche Angriffsmittel dient vorzugsweise zum Abtrennen bzw. zum Herausziehen des gitterartigen Bauteils, insbesondere zusammen mit den daran fixierten Energiespeicherelementen. Das Herausziehen des gitterartigen Bauteils kann beispielsweise per Hand oder in maschineller Weise durchgeführt werden.

Mittels des seitlichen Angriffsmittels und durch das Herausziehen des gitterartigen Bauteils können die einzelnen Komponenten des erfindungsgemäßen Energiespeichers voneinander getrennt werden. Im Zusammenhang mit einer Wiederaufbereitung bzw. einem Recycling des Energiespeichers können mit diesem Hilfsmittel die einzelnen Komponenten des Energiespeichers in vereinfachter Weise sortenrein getrennt und dann entsprechend aufbereitet und weiterverarbeitet werden.

In diesem Zusammenhang ist es besonders vorteilhaft, wenn das gitterartige Bauteil eine hohe Zugfestigkeit aufweist, damit es beim Herausziehen im Zuge des Wiederaufbereitungsprozesses nicht reißt und für diesen Zweck ausreichend stabil ist.

Vorzugweise ist das seitliche Angriffsmittel nicht in die Vergussmasse eingebettet, so dass es freiliegt und einen guten Angriffspunkt zum Herausziehen des gitterartigen Bauteils bietet. Hierfür eignet sich insbesondere die Form einer Lasche, die mit einem maschinellen Greifer oder mit der Hand gegriffen und aus der Verbindung der Bauteile herausgezogen werden kann. Bei der Gestaltung des gitterartigen Bauteils mit einem seitlichen Angriffsmittel, also beispielsweise einer Lasche, kann dieses Angriffsmittel seitlich von einem Greifapparat oder Ähnlichem oder mit der Hand mit entsprechend hoher Krafteinwirkung nach oben herausgezogen werden. Die Energiespeicherelemente können auf diese Weise von dem Strukturbauteil ohne weitere Hilfsmittel getrennt werden. Dabei verbleibt das Vergussmaterial zu großen Teilen an dem Strukturbauteil. Das gitterartige Bauteil dient in dieser Ausführungsform als Trennwerkzeug und verbleibt während des Trennens der Bauteile an den Energiespeicherelementen. Mit dieser Maßnahme wird eine deutlich verbesserte Recyclingfähigkeit des Energiespeichers ermöglicht.

Die Erfindung umfasst weiterhin ein Verfahren zur Herstellung eines Energiespeichers gemäß der obigen Beschreibung. Dieses Verfahren umfasst die folgenden Verfahrensschritte:
a. Die zylindrischen Rundzellen werden mit paralleler Ausrichtung ihrer jeweiligen Längsachsen und mit der ersten Stirnseite voran auf dem Strukturbauteil platziert, wobei zwischen den zylindrischen Rundzellen und dem Strukturbauteil das gitterartige Bauteil angeordnet wird;
b. Die zylindrischen Rundzellen werden mittels des Vergussmaterials an dem Strukturbauteil fixiert.

Die Abfolge der einzelnen Schritte bei der Herstellung des Energiespeichers kann auf unterschiedliche Weise erfolgen. Beispielsweise können zuerst die zylindrischen Rundzellen platziert und anschließend das Vergussmaterial appliziert werden. Weiterhin ist es möglich, dass zuerst das noch nicht verfestigte Vergussmaterial auf das Strukturbauteil gegeben wird und erst dann die zylindrischen Rundzellen platziert werden, bevor das Vergussmaterial verfestigt wird.

Die übrigen Komponenten des Energiespeichers können ebenfalls zu unterschiedlichen Zeitpunkten montiert werden. Beispielsweise kann der Zellhalter, der auf der Oberseite der zylindrischen Rundzellen angebracht wird, vor oder nach der Fixierung der zylindrischen Rundzellen an dem Strukturbauteil angebracht werden.

Die mechanische Fixierung der Energiespeicherelemente erfolgt über das Vergussmaterial, das das gitterartige Bauteil durchdringt. Zusätzlich kann eine Klebstoffverbindung vorgesehen sein, die insbesondere im Rahmen einer Vorfixierung im Zuge des Montageprozesses angebracht wird.

Die Platzierung der zylindrischen Rundzellen auf dem Strukturbauteil kann einzeln oder in Gruppen, insbesondere maschinell, erfolgen. Weitere Arbeitsschritte, wie insbesondere das Anbringen des Zellhalters, das Schweißen zur elektrischen Kontaktierung der zylindrischen Rundzellen und das Vergießen mit dem Vergussmaterial können beispielsweise anschließend erfolgen.

Insbesondere wenn das Vergussmaterial auf das Strukturbauteil aufgebracht wird, bevor der Verbund mit den zylindrischen Rundzellen zusammen mit dem daran gegebenenfalls vorfixierten gitterartigen Bauteil platziert wird, werden als besonderer Vorteil Lufteinschlüsse zuverlässig verhindert, so dass eine besonders gute Wärmeleitfähigkeit und damit Wärmeabführung aus dem Energiespeicher möglich ist.

In besonders bevorzugten Ausgestaltungen des erfindungsgemäßen Verfahrens ist eine Vorfixierung des gitterartigen Bauteils vorgesehen. Hierbei kann eines der folgenden Merkmale realisiert sein:
a. Vor der Platzierung der zylindrischen Rundzellen auf dem Strukturbauteil wird das gitterartige Bauteil an dem Strukturbauteil vorfixiert;
b. Vor der Platzierung der zylindrischen Rundzellen auf dem Strukturbauteil wird das gitterartige Bauteil an den ersten Stirnseiten der zylindrischen Rundzellen vorfixiert.

Zur Vorfixierung wird das gitterartige Bauteil vorzugsweise verklebt, also insbesondere vorab an dem Strukturbauteil gemäß dem vorgenannten Merkmal a. oder vorab an den jeweiligen Stirnseiten der zylindrischen Rundzellen. In diesem Zusammenhang ist es besonders vorteilhaft, wenn das gitterartige Bauteil selbstklebende Eigenschaften aufweist. Dies erleichtert die Vorfixierung und reduziert die Anzahl der erforderlichen Arbeitsschritte.

Statt selbstklebender Eigenschaften des gitterförmigen Bauteils kann es auch vorgesehen sein, dass das gitterartige Bauteil im Zuge der Montage mit einem Klebstoff versehen wird. In entsprechender Weise kann es auch vorgesehen sein, dass ein Klebstoff auf das Strukturbauteil und/oder auf die jeweiligen Stirnseiten der zylindrischen Rundzellen aufgebracht wird, bevor hieran das gitterartige Bauteil fixiert oder vorfixiert wird.

Wenn das gitterartige Bauteil an den jeweiligen Stirnseiten der zylindrischen Rundzellen vorfixiert wird, können damit die einzelnen zylindrischen Rundzellen während des Montageprozesses bereits außerhalb ihrer späteren Position in dem Energiespeicher in einer parallel zueinander fixierten Position gehalten werden, wodurch die Montage erleichtert wird.

In einer bevorzugten Ausgestaltung des erfindungsgemäßen Verfahrens ist das folgende zusätzliche Merkmal vorgesehen:
a. Das Vergussmaterial wird so aufgebracht, dass es die Hohlräume zwischen dem Strukturbauteil und den ersten Stirnseiten der zylindrischen Rundzellen einschließlich der Durchbrechungen des gitterartigen Bauteils ausfüllt und die dem gitterartigen Bauteil zugewandten ersten Stirnseiten der zylindrischen Rundzellen umschließt.

Zur Aufbringung des Vergussmaterials wird das Vergussmaterial in fließfähiger und/oder gießfähiger Form verwendet. Zur Applizierung des Vergussmaterials kann das Vergussmaterial beispielsweise direkt auf das Strukturbauteil aufgebracht werden, oder das Vergussmaterial wird nach einer bereits erfolgten Montage eines Gehäuses des Energiespeichers in das Gehäuse gegeben.

Bei dem erfindungsgemäßen Energiespeicher sind im Vergleich mit herkömmlichen Energiespeichern weniger kostentreibende Bauteile für die Herstellung notwendig. Zudem erlaubt der erfindungsgemäße Energiespeicher eine besonders gute thermische Anbindung der Energiespeicherelemente an das Strukturbauteil, so dass im Allgemeinen eine bessere Wärmeableitung als bei herkömmlichen Energiespeichern möglich ist. Weiterhin erlaubt der erfindungsgemäße Energiespeicher eine besonders gute mechanische Verbindung zwischen den Energiespeicherelementen und dem Strukturbauteil durch das in das Vergussmaterial eingebettete gitterartige Bauteil.

Die Erfindung umfasst schließlich ein Verfahren zum Recyceln des beschriebenen Energiespeichers am Ende von dessen Produktionslebenszyklus. Bei diesem Verfahren werden die zylindrischen Rundzellen von den übrigen Elementen des Energiespeichers vor einer weiteren Aufbereitung abgetrennt, indem das gitterartige Bauteil mittels des seitlichen Angriffsmittels (oder gegebenenfalls der seitlichen Angriffsmittel) zur Lösung der Fixierung zwischen den zylindrischen Rundzellen und dem Strukturelement aus dem Energiespeicher herausgezogen wird.

Bei diesem Wiederaufbereitungsverfahren dient das gitterartige Bauteil also als Hilfsmittel zum sortenreinen Trennen der Materialien des Energiespeichers.

Mittels des gitterartigen Bauteils können die Energiespeicherelemente von dem Strukturbauteil ohne weitere Hilfsmittel getrennt werden. Bei dem Herausziehen des gitterartigen Bauteils verbleiben in der Regel das Vergussmaterial und gegebenenfalls der Klebstoff im Wesentlichen am Strukturbauteil. Das gitterartige Bauteil dient bei diesem Prozess als Trennwerkzeug und verbleibt während des Trennens der Bauteile an den Energiespeicherelementen.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: Schematischer Querschnitt durch einen erfindungsgemäßen Energiespeicher;
- Fig. 2: Schrägansicht auf Teile eines erfindungsgemäßen Energiespeichers;
- Fig. 3: Seitenansicht auf Teile eines erfindungsgemäßen Energiespeichers;
- Fig. 4: Schrägansicht eines geschnittenen Ausschnitts eines erfindungsgemäßen Energiespeichers im Bereich einer Stirnseite eines Energiespeicherelements;
- Fig. 5: Schrägansicht auf Teile einer weiteren besonders bevorzugten Ausführungsform eines erfindungsgemäßen Energiespeichers;
- Fig. 6: Weitere Schrägansicht auf den Energiespeicher aus Fig. 5; und
- Fig. 7: Schrägansicht eines gitterartigen Bauteils als Element eines erfindungsgemäßen Energiespeichers.

### BESCHREIBUNG VON AUSFÜHRUNGSBEISPIELEN

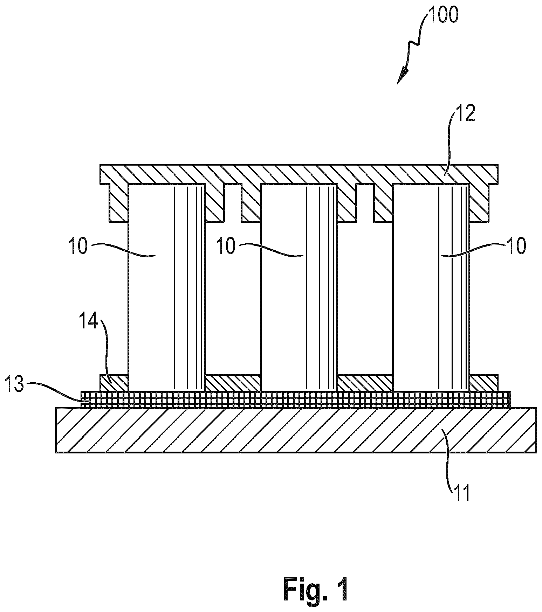

**Fig. 1** zeigt einen schematischen Querschnitt durch eine bevorzugte Ausführungsform eines erfindungsgemäßen Energiespeichers 100, wobei ein Ausschnitt des Systems gezeigt ist. Der Energiespeicher 100 umfasst eine Mehrzahl von Energiespeicherelementen, die als zylindrische Rundzellen 10 ausgebildet sind. Die zylindrischen Rundzellen 10 sind mit paralleler Ausrichtung ihrer Längsachsen nebeneinander angeordnet. Dabei sind die zylindrischen Rundzellen 10 vorzugsweise in mehreren parallelen Reihen in dem Energiespeicher 100 angeordnet, beispielsweise vierzehn Reihen mit jeweils elf zylindrischen Rundzellen, also insgesamt 154 zylindrische Rundzellen.

Im unteren Bereich des Energiespeichers befindet sich ein Strukturbauteil 11, auf dem die zylindrischen Rundzellen 10 angeordnet sind. Hierbei weist eine erste Stirnseite der zylindrischen Rundzellen 10 in Richtung des Strukturbauteils 11. Je nach Ausgestaltung und Verwendung des Energiespeichers kann es sich bei dem Strukturbauteil um unterschiedliche Bauteile handeln, beispielsweise um eine Seite eines Batteriegehäuses, um eine Kühlplatte oder um ein Karosseriebauteil. Es kann sich beispielsweise auch um eine Kühlplatte handeln, die in ein Gehäuseelement oder in ein Karosseriebauteil integriert ist.

Auf der oberen Seite des Energiespeichers 100 werden die zylindrischen Rundzellen 10 von einem Zellhalter 12 fixiert. Bei dem Zellhalter 12 handelt es sich insbesondere um ein Spritzgussteil aus Kunststoff. Der Zellhalter 12 sorgt für eine korrekte Positionierung, Stabilisierung und Fixierung der zylindrischen Rundzellen 10. Darüber hinaus kann der Zellhalter 12 auch für eine elektrische Isolierung der zylindrischen Rundzellen 10 gegenüber weiteren Elementen des Energiespeichers, beispielsweise einem Gehäuse, sorgen. Weiterhin kann im Bereich des Zellhalters die Verschaltung und der elektrische Anschluss der einzelnen zylindrischen Rundzellen 10 erfolgen. Vorzugsweise ist der Zellhalter 12 so ausgebildet, dass er einen Abstand zwischen den einzelnen zylindrischen Rundzellen 10 sicherstellt, so dass zum einen Kurzschlüsse vermieden werden und zum anderen eine Überhitzung des Energiespeichers 100 vermieden wird.

Gemäß der Erfindung ist zwischen dem Strukturbauteil 11 und den jeweiligen Stirnseiten der zylindrischen Rundzellen 10 ein gitterartiges Bauteil 13 angeordnet. Auf dieser (unteren) Seite des Energiespeichers 100 ist also kein Zellhalter wie bei herkömmlichen Energiespeichern vorgesehen.

Das gitterartige Bauteil 13 ist zusammen mit den Stirnseiten der zylindrischen Rundzellen 10 auf dieser Seite des Energiespeichers 100 in ein Vergussmaterial 14 eingebettet. Das Vergussmaterial 14 durchdringt die Durchbrechungen des gitterartigen Bauteils 13 und umschließt gleichzeitig die Stirnseiten der zylindrischen Rundzellen 10, beispielsweise in einer Höhe von wenigen Millimetern. Dies sorgt für eine mechanische Fixierung der zylindrischen Rundzellen 10 an dem Strukturbauteil 11. Weiterhin wird damit in besonders vorteilhafter Weise eine elektrische Isolierung der zylindrischen Rundzellen 10 gegenüber dem Strukturbauteil 11 erreicht, da das Vergussmaterial 14 vorzugsweise elektrisch isolierende Eigenschaften hat. Zweckmäßigerweise ist auch das gitterartige Bauteil 13 aus einem elektrisch isolierenden Material gebildet, beispielsweise aus Kunststoff, Glasfaser, Aramid, Nylon, Epoxidharz, oder Kombinationen aus diesen Werkstoffen. Das gitterartige Bauteil 13 gewährleistet zudem einen gleichmäßigen Isolationsabstand zwischen den jeweiligen Stirnseiten der zylindrischen Rundzellen 10 und dem Strukturbauteil 11. Das gitterartige Bauteil 13 zusammen mit dem Vergussmaterial 14 kann daher eine bei herkömmlichen Energiespeichern vorgesehene Isolationsfolie ersetzen.

Weiterhin ist es in besonders bevorzugten Ausführungsformen des Energiespeichers 100 vorgesehen, dass das Vergussmaterial 14 wärmeleitfähige Eigenschaften aufweist. Hierdurch wird eine gute Wärmeübertragung von den sich im Betrieb gegebenenfalls aufheizenden zylindrischen Rundzellen 10 und das Strukturbauteil 11 ermöglicht. Dies ist ein besonderer Vorteil gegenüber herkömmlichen Energiespeichern, die mit einer durchgehenden Isolationsfolie versehen sind. Eine solche Isolationsfolie hat üblicherweise einen hohen Wärmewiderstand und beeinträchtigt eine gute Wärmeübertragung von den jeweiligen Energiespeicherelementen auf beispielsweise ein Gehäuse des Energiespeichers. Bei dem erfindungsgemäßen Energiespeicher 100 hingegen wird zum einen eine gute elektrische Isolierung erreicht und gleichzeitig wird eine gute Wärmeübertragung auf das Strukturbauteil 11 ermöglicht.

Insgesamt erlaubt der erfindungsgemäße Energiespeicher 100 eine sehr gute mechanische Verbindung der zylindrischen Rundzellen 10 mit dem Strukturbauteil 11. Gleichzeitig wird eine sehr gute thermische Anbindung der zylindrischen Rundzellen 10 an das Strukturbauteil 11 erreicht, wobei zugleich weniger kostentreibende Bauteile als bei herkömmlichen Energiespeichern erforderlich sind. Insbesondere kann auf einen zweiten Zellhalter oder ein zweites Zellhalterteil verzichtet werden.

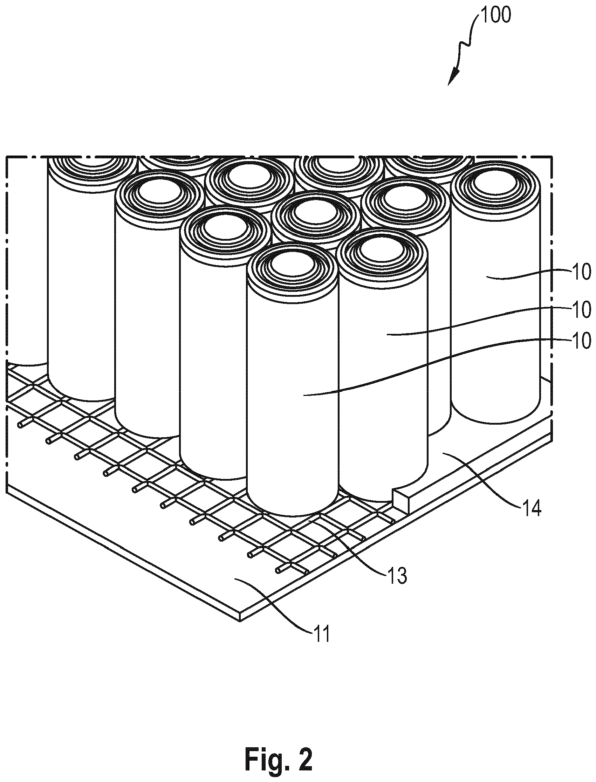

**Fig. 2** zeigt in geschnittener Ansicht Teile des erfindungsgemäßen Energiespeichers 100. Die einzelnen zylindrischen Rundzellen 10, die in einem regelmäßigen Muster in verhältnismäßig enger Packung in einer Ebene aufgestellt sind, sind mit ihrer unteren Stirnseite dem Strukturbauteil 11 zugewandt. Zwischen dem Strukturbauteil 11 und den jeweiligen Stirnseiten der zylindrischen Rundzellen 10 befindet sich das gitterartige Bauteil 13. Das gitterartige Bauteil und die jeweiligen Stirnseiten der zylindrischen Rundzellen 10 sind in das Vergussmaterial 14 eingebettet, welches zum einen für die mechanische Fixierung der zylindrischen Rundzellen 10 an dem Strukturbauteil 11 sorgt und zum anderen gleichzeitig die elektrische Isolierung und eine gute thermische Anbindung der zylindrischen Rundzellen 10 gegenüber dem Strukturbauteil 11 gewährleistet.

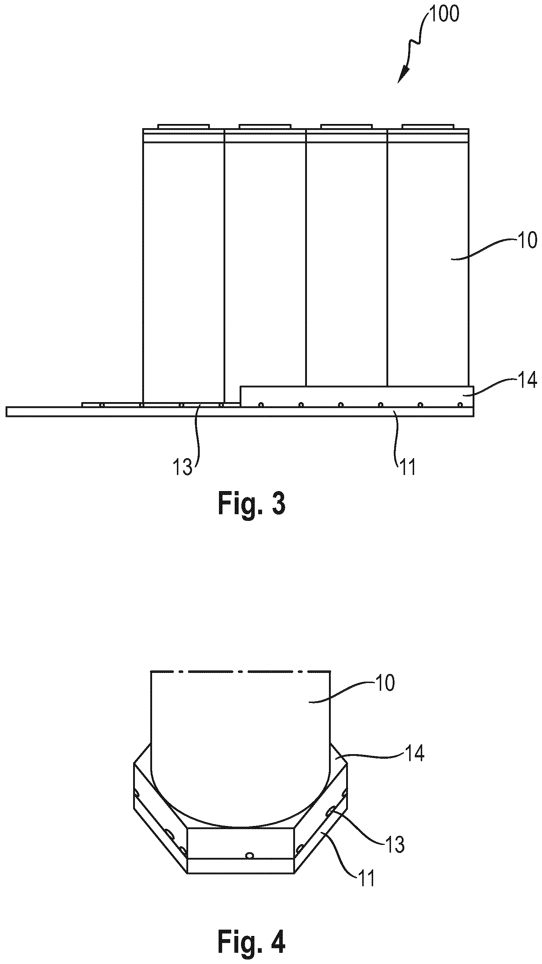

**Fig. 3** zeigt eine schematische Seitenansicht von Teilen des Energiespeichers 100, aus der die Einbettung der jeweiligen Stirnseiten der zylindrischen Rundzellen 10 und des gitterartigen Bauteils 13 in die Vergussmasse 14 hervorgeht.

**Fig. 4** zeigt einen geschnittenen Ausschnitt des Energiespeichers 100 im unteren Bereich einer einzelnen zylindrischen Rundzelle 10. Das gitterartige Bauteil 13 und die untere Stirnseite der zylindrischen Rundzelle 10 sind in das Vergussmaterial 14 eingebettet, wodurch zum einen eine mechanische Fixierung der zylindrischen Rundzelle 10 auf dem Strukturbauteil 11 sowie eine elektrische Isolierung der zylindrischen Rundzelle 10 gegenüber dem Strukturbauteil 11 und eine gute Wärmeübertragung erreicht wird.

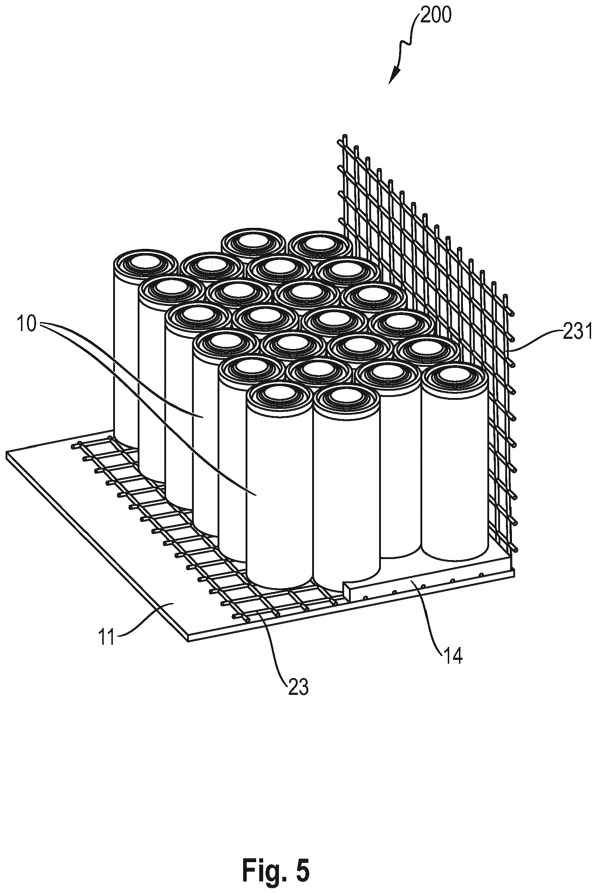

**Fig. 5** zeigt eine weitere, besonders bevorzugte Ausgestaltung eines erfindungsgemäßen Energiespeichers 200. Die Darstellung ist vergleichbar mit der Darstellung der Fig. 2 und zeigt nicht alle Teile des Energiespeichers 200. Insbesondere ist der obere Zellhalter nicht dargestellt. Die der Fig. 2 entsprechenden Teile sind mit den gleichen Bezugszeichen versehen.

Im Unterschied zu der anhand der Fig. 2 erläuterten Ausführungsform eines erfindungsgemäßen Energiespeichers ist der in Fig. 5 gezeigte Energiespeicher 200 mit einem gitterartigen Bauteil 23 versehen, welches seitlich derart nach oben umgebogen ist, dass es ein seitliches Angriffsmittel 231 bildet. Der Bereich 231 des gitterartigen Bauteils 23 ist nicht in das Vergussmaterial 14 eingebettet und ragt derart aus dem übrigen Verbund des Energiespeichers 200 heraus, dass es eine Angriffsfläche zum Herausziehen des gitterartigen Bauteils 23 bietet. Dies kann für eine Trennung der einzelnen Bauteile des Energiespeichers 200 im Rahmen eines Recyclingprozesses genutzt werden.

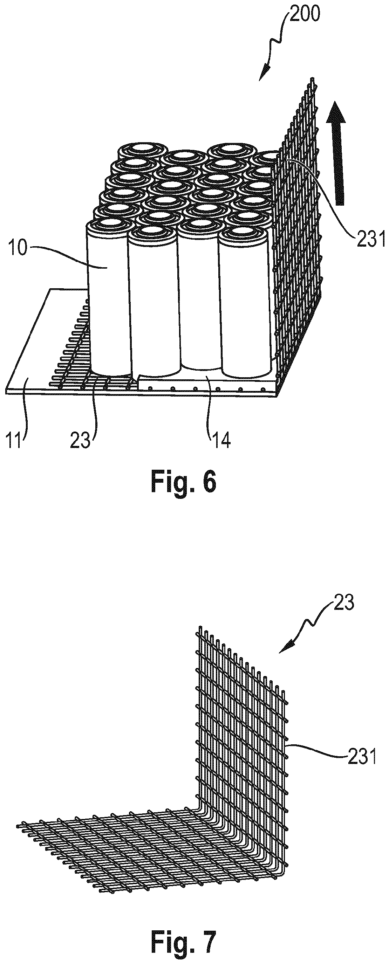

**Fig. 6** illustriert die Ausführungsform des Energiespeichers 200 aus Fig. 5 in einer weiteren Ansicht. Das seitlich nach oben umgeformte oder umgebogene gitterartige Bauteil 23 bildet ein seitliches Angriffsmittel 231, welches derart aus dem übrigen Verbund des Energiespeichers 200 heraussteht, dass es per Hand oder mit einem mechanischen Greifwerkzeug gefasst und in Pfeilrichtung nach oben gezogen werden kann. Das gitterartige Bauteil 23 ist vorzugsweise mit einer hierfür geeigneten Zugfestigkeit ausgebildet, so dass es beim Herausziehen nicht reißt. Beispielsweise ist das Material für das gitterartige Bauteil 23 faserverstärkt. Beim Herausziehen des gitterartigen Bauteils 23 verbleibt das Vergussmaterial 14 in der Regel zu großen Teilen am Strukturelement 11. Die mechanische Verbindung zwischen den zylindrischen Rundzellen 10 und dem Strukturbauteil 11 wird dabei jedoch unterbrochen. Somit kann das gitterartige Bauteil 23 als Trennwerkzeug zum sortenreinen Trennen der einzelnen Komponenten des Energiespeichers 200 am Ende von dessen Produktionslebenszyklus dienen, so dass die einzelnen Komponenten einer Aufarbeitung und Wiederverwertung im Zuge eines Recyclingprozesses zugeführt werden können.

**Fig. 7** zeigt das gitterartige Bauteil 23 aus Fig. 6 in isolierter Darstellung. Das seitliche Angriffsmittel 231 ist in dieser Ausführungsform als abgebogener Bereich des gitterartigen Bauteils ausgebildet. In anderen Ausführungsbeispielen kann das seitliche Angriffsmittel 231 beispielsweise auch als Lasche, die nicht zwingend eine gitterartige Struktur aufweisen muss, ausgebildet sein.

## Patentansprüche

1. Energiespeicher (100; 200) mit einer Mehrzahl von Energiespeicherelementen in Form von zylindrischen Rundzellen (10), die jeweils eine zylindrische Mantelfläche und zwei Stirnseiten aufweisen, mit den folgenden Merkmalen:
a. Die zylindrischen Rundzellen (10) sind mit paralleler Ausrichtung ihrer jeweiligen Längsachsen in einem Verbund angeordnet,
b. die zylindrischen Rundzellen (10) sind an einem Strukturbauteil (11) angeordnet, wobei eine erste Stirnseite der zylindrischen Rundzellen (10) dem Strukturbauteil (11) zugewandt ist,
c. die zweite Stirnseite der zylindrischen Rundzellen (10) wird von einem Zellhalter (12) gehalten,
**dadurch gekennzeichnet, dass**
d. zwischen dem Strukturbauteil (11) und der ersten Stirnseite der zylindrischen Rundzellen (10) ein gitterartiges Bauteil (13; 23) angeordnet ist, wobei
e. im Bereich des gitterartigen Bauteils (13; 23) ein Vergussmaterial (14) vorgesehen ist und
f. das gitterartige Bauteil (13) in das Vergussmaterial (14) eingebettet ist.

2. Energiespeicher nach Anspruch 1 mit dem folgenden zusätzlichen Merkmal:
a. Das Vergussmaterial (14) liegt in Form einer Schicht vor, in welche weiterhin zumindest die ersten Stirnseiten der zylindrischen Rundzellen (10) eingebettet sind.

3. Energiespeicher nach Anspruch 1 oder Anspruch 2 mit dem folgenden zusätzlichen Merkmal:
a. Bei dem Vergussmaterial (14) handelt es sich um ein ausgehärtetes Vergussharz.

4. Energiespeicher nach einem der vorhergehenden Ansprüche mit mindestens einem der folgenden zusätzlichen Merkmale:
a. Das Vergussmaterial (14) ist elektrisch isolierend;
b. Das Vergussmaterial (14) ist wärmeleitfähig.

5. Energiespeicher nach einem der vorhergehenden Ansprüche mit mindestens einem der folgenden zusätzlichen Merkmale:
a. Das gitterartige Bauteil (13) ist aus einem elektrisch isolierenden Material gebildet;
b. Das gitterartige Bauteil (13) ist aus Kunststoff und/oder Glasfaser und/oder Aramid und/oder Nylon und/oder Epoxidharz und/oder Kombinationen dieser Materialien gebildet;
c. Das gitterartige Bauteil (13) ist aus einem faserverstärkten Material gebildet.

6. Energiespeicher nach einem der vorhergehenden Ansprüche mit mindestens einem der folgenden zusätzlichen Merkmale:
a. Zwischen dem gitterartigen Bauteil (13; 23) und den ersten Stirnseiten der zylindrischen Rundzellen (10) besteht eine Vorfixierungs-Klebeverbindung;
b. Zwischen dem gitterartigen Bauteil (13; 23) und dem Strukturbauteil (11) besteht eine Vorfixierungs-Klebeverbindung.

7. Energiespeicher nach einem der vorhergehenden Ansprüche mit einem der folgenden zusätzlichen Merkmale:
a. Das gitterartige Bauteil (13; 23) ist einseitig selbstklebend;
b. Das gitterartige Bauteil (13; 23) ist beidseitig selbstklebend.

8. Energiespeicher nach einem der vorhergehenden Ansprüche mit mindestens einem der folgenden zusätzlichen Merkmale:
a. Das Strukturbauteil (11) ist ein Gehäuseteil des Energiespeichers;
b. Das Strukturbauteil (11) ist eine Kühlplatte;
c. Das Strukturbauteil (11) ist ein Teil einer Fahrzeugkarosserie.

9. Energiespeicher nach einem der vorhergehenden Ansprüche mit mindestens einem der folgenden zusätzlichen Merkmale:
a. Der Zellhalter (12) ist einteilig;
b. Der Zellhalter (12) ist aus Kunststoff.

10. Energiespeicher nach einem der vorhergehenden Ansprüche mit mindestens einem der folgenden zusätzlichen Merkmale:
a. Die zylindrischen Rundzellen (10) sind Lithium-lonen-Zellen;
b. Die zylindrischen Rundzellen (10) sind Natrium-lonen-Zellen.

11. Energiespeicher nach einem der vorhergehenden Ansprüche mit mindestens einem der folgenden zusätzlichen Merkmale:
a. Das gitterartige Bauteil (23) weist mindestens ein seitliches Angriffsmittel (231) zum Herausziehen des gitterartigen Bauteils auf;
b. Das seitliche Angriffsmittel (231) wird von einem abgewinkelten Abschnitt des gitterartigen Bauteils gebildet;
c. Das seitliche Angriffsmittel (231) ist eine Lasche.

12. Verfahren zur Herstellung eines Energiespeichers nach einem der Ansprüche 1 bis 11 mit den folgenden Verfahrensschritten:
a. Die zylindrischen Rundzellen (10) werden mit paralleler Ausrichtung ihrer jeweiligen Längsachsen und mit der ersten Stirnseite voran auf dem Strukturbauteil (11) platziert, wobei zwischen den zylindrischen Rundzellen (10) und dem Strukturbauteil (11) das gitterartige Bauteil (13; 23) angeordnet wird;
b. Die zylindrischen Rundzellen (10) werden mittels des Vergussmaterials (14) an dem Strukturbauteil fixiert.

13. Verfahren nach Anspruch 12 mit einem der folgenden zusätzlichen Merkmale:
a. Vor der Platzierung der zylindrischen Rundzellen (10) auf dem Strukturbauteil (11) wird das gitterartige Bauteil (13; 23) an dem Strukturbauteil (11) vorfixiert;
b. Vor der Platzierung der zylindrischen Rundzellen (10) auf dem Strukturbauteil (11) wird das gitterartige Bauteil (13; 23) an den ersten Stirnseiten der zylindrischen Rundzellen (10) vorfixiert.

14. Verfahren nach Anspruch 12 oder Anspruch 13 mit dem folgenden zusätzlichen Merkmal:
a. Das Vergussmaterial (14) wird so aufgebracht, dass es die Hohlräume zwischen dem Strukturbauteil (11) und den ersten Stirnseiten der zylindrischen Rundzellen (10) einschließlich der Durchbrechungen des gitterartigen Bauteils (13; 23) ausfüllt und die dem gitterartigen Bauteil zugewandten ersten Stirnseiten der zylindrischen Rundzellen (10) umschließt.

15. Verfahren zum Recyceln eines Energiespeichers (200) gemäß Anspruch 11, **dadurch gekennzeichnet, dass** die zylindrischen Rundzellen (10) von übrigen Elementen des Energiespeichers vor einer weiteren Aufbereitung abgetrennt werden, indem das gitterartige Bauteil (23) mittels des seitlichen Angriffsmittels (231) zur Lösung der Fixierung zwischen den zylindrischen Rundzellen (10) und dem Strukturelement (11) aus dem Energiespeicher herausgezogen wird.
